# EUROPÄISCHE PATENTANMELDUNG

(11) **EP 0 576 926 A2**
(43) Veröffentlichungstag der Anmeldung: **05.01.1994**
(21) Anmeldenummer: 93109669.7
(22) Anmeldetag: 17.06.1993
(51) Int. Cl.: A21D 13/00, B65D 65/46, A21D 2/26, A21D 2/36

(54) **Verfahren zur Herstellung eines Einwegbehältnisses**

(30) Priorität: 26.06.1992 DE 4221018
(71) Anmelder: Kienle, Christoph, D-86438 Kissing (DE)
(72) Erfinder: Kienle, Christoph, D-86438 Kissing (DE)
(74) Vertreter: Munk, Ludwig, Dipl.-Ing.

(57) **Zusammenfassung**

Als Backprodukt hergestellte Einwegbehältnisse in Form von Schalen und dergleichen erhalten dadurch eine besonders hohe Haltbarkeit und Dichtheit, daß sie zumindest auf der Innenseite mit einer Eiweiß zumindest enthaltenden Glasur versehen werden. Zur weiteren Steigerung der Dichtheit können sie aus einem Teig hergestellt werden, der als Laugenteig ausgebildet ist.

## Beschreibung

Die Erfindung betrifft ein Verfahren zur Herstellung eines Einwegbehältnisses, vorzugsweise in Form einer Schale, aus unter Verwendung von Getreidemehl und Wasser hergestelltem Teig, der geformt und anschließend gebacken oder getrocknet wird.

Ein Verfahren dieser Art ist aus der **DE 40 08 045 A1** bekannt. Hierbei findet zur Bildung des Teigs normaler Brotteig Verwendung. Zur Erzielung einer besonders hohen Dichtheit und Haltbarkeit wird in diesem Zusammenhang vorgeschlagen, die Innenseite des fertig gebackenen Behältnisses einzufetten und/oder die Außenseite des Behältnisses vor dem Backen zu laugen. Mit diesen Maßnahmen läßt sich jedoch nur eine begrenzte Haltbarkeit gegen Aufweichung erzielen. Die Erfahrung hat gezeigt, daß die Einfettung auf der Innenseite des Behältnisses nur kurzfristig wirksam bleibt. Das Laugen der Außenseite dient ohnehin mehr der Erzielung einer besonders geschmacklichen Note als der Haltbarkeit.

Hiervon ausgehend ist es daher die Aufgabe der vorliegenden Erfindung, ein Verfahren eingangs erwähnter Art mit einfachen und kostengünstigen Mitteln so zu verbessern, daß sich eine hohe Haltbarkeit aufweisende Verfahrensprodukte ergeben und die dennoch zum Verzehr geeignet bzw. zumindest vollständig biologisch abbaubar sind.

Diese Aufgabe wird erfindungsgemäß dadurch gelöst, daß das Behältnis zumindest auf seiner Innenseite mit einer Eiweiß zumindest enthaltenden Glasur versehen wird.

Mit Hilfe der erfindungsgemäßen Glasur wird auf einfache Weise die erforderliche Langzeitdichtheit erreicht. Dies gilt in vorteilhafter Weise auch für besonders dünne Stellen. Die Dicke der Glasur kann in vorteilhafter Weise an die Verhältnisse des Einzelfalls angepaßt werden. Zudem ergibt die erfindungsgemäße Glasur einen hohen Glanz und damit auch ein sauberes Aussehen.

Eine weitere zweckmäßige Fortbildung kann darin bestehen, daß zur Bildung der Glasur reines Eiweiß Verwendung findet. Dies ergibt eine besonders hohe Dichtheit und einen besonders hohen Glanz.

Eine weitere zweckmäßige Maßnahme kann darin bestehen, daß bei der Herstellung des Teigs reines Eiweiß zugegeben werden. Hierdurch wird eine besonders haltbare Netzstruktur erreicht. Zweckmäßig kann der Anteil an reinem Eiweiß 10 bis 20% der Trockensubstanz betragen. Dasselbe gilt für den Verwendung findenden Getreidemehlanteil.

In weiterer Fortbildung der übergeordneten Maßnahmen kann die Trockensubstanz des Teigs neben Getreidemehl und Eiweiß ein Füllmaterial vorzugsweise in Form von Treber und/oder Kleie und/oder Strohmehl enthalten. Die Verwendung eines derartigen Füllmaterials senkt den erforderlichen Getreidemehlanteil und wirkt sich dementsprechend günstig auf die Herstellungskosten aus. Ein weiterer Vorteil ist in dem hohen Ballaststoffanteil zu sehen, was ernährungstechnologisch günstig ist.

Eine weitere zweckmäßige Maßnahme kann darin bestehen, daß das Füllmaterial mit Sauerteig angeteigt wird. Hierdurch läßt sich das Quellverhalten des das vom geronnenen Eiweiß gebildete Netz ausfachenden Materials beeinflussen und dementsprechend ein Teig sogenannter kürzerer oder längerer Qualität erzielen.

In weiterer Fortbildung der übergeordneten Maßnahmen kann der Teig unter Verwendung von Lauge als Flüssigkeitsanteil hergestellt werden.

Diese Lauge bewirkt, daß das in der Trockensubstanz enthaltene Eiweiß mit der Lauge koaguliert. Es kommt dementsprechend zu einer Gerinnung des Eiweißes, die jedoch infolge der Anwesenheit von Wasser langsam vor sich geht. Das gerinnende Eiweiß bildet dabei praktisch ein Netz, welches durch die im Teig auch noch vorhandenen Füllstoffe, wie Stärke, Cellulose und dergleichen, ausgefüllt wird, welche infolge der Anwesenheit von Feuchtigkeit aufquellen. Die genannte Maßnahme ergibt somit in vorteilhafter Weise Verfahrensprodukte lederartiger Konsistenz, wodurch die durch Glasur erzielte Dichtheit und Standfestigkeit gegen Aufweichen noch erhöht werden kann. Vielfach führt aber bereits die lederartige Konsistenz zu ausreichender Dichtheit. Ein weiterer Vorteil der genannten Maßnahme ist darin zu sehen, daß der durch und durch mit Lauge durchsetzte Teig vergleichsweise dünn ausgewalzt werden kann bzw. preß- und spritzfähig ist, was das Formen der gewünschten Behältnisse erleichtert.

Weitere vorteilhafte Ausgestaltungen und zweckmäßige Fortbildungen der übergeordneten Maßnahmen sind in den restlichen Unteransprüchen angegeben.

Nachstehend wird ein Ausführungsbeispiel der Erfindung näher erläutert.

175 g von aus Getreidemehl separiertem Eiweiß, wie es als Abfallprodukt bei der Stärkeherstellung anfällt, und 175 g Getreidemehl, hier Weizenmehl, wurden mit etwa 0,35 l Wasser bis zum Erreichen einer breiigen Masse angeteigt. Anschließend wurde der Feststoffanteil des Teigs mit einem Füllmaterial, hier in Form von Biertreber, bis auf 1.000 g aufgefüllt. Ebenso wurde der Flüssigkeitsanteil bis auf einen Liter Gesamtflüssigkeit aufgefüllt, wobei weitere 0,6 l und 0,05 l Brezenlauge Verwendung fanden.

Es wäre denkbar, als Füllmaterial auch Kleie oder Strohmehl oder Brösel von gemahlenem Brot oder gemahlenen Semmeln etc. oder eine Mischung der erwähnten Stoffe vorzusehen. Ebenso lassen sich die Prozentsätze von Eiweiß und Mehl variieren. Je mehr Eiweiß Verwendung findet, um so haltbarer werden die Verfahrensprodukte. Für die vorliegende Teigmenge können die Eiweiß- und Mehlanteile, die zweckmäßig gleich sind, zwischen 150 g und 200 g variieren. Auch die Laugenanteile sind variierbar. Der Laugenanteil an der Gesamtflüssigkeit kann zwischen 3 und 10% verändert werden. Je höher der Laugenanteil ist, um so lederartiger und flexibler sind die Verfahrensprodukte. Selbstverständlich kann anstelle der erwähnten Brezenlauge, die eine bestimmte Natronlauge ist, auch eine andere, als Lebensmittel geeignete Lauge Verwendung finden.

Der in oben umrissenen Weise angemachte Teig wurde eine Stunde stehengelassen. Nach dieser Ruhezeit wurde der Teig zu dünnen Fladen von etwa 0,8 bis 1 mm Dicke ausgewalzt. Diese Fladen wurden auf eine Positivform aufgebracht und in einem Ofen bei etwa 200 °C gebacken. Die Backzeit betrug ca. 8 Minuten. Es wäre auch denkbar, den Teig nicht zu backen, sondern lediglich bei Umgebungstemperatur zu trocknen, sofern genügend Trocknungszeit zur Verfügung steht. Ebenso wäre es denkbar, den ausgewalzten Teig zwischen einer nach Art eines Waffeleisens aufgebauten Positiv- und Negativform einzupressen, um exakte Innen- und Außenoberflächen zu erzielen und um die Backzeit zu verringern. Zum selben Zweck wäre es aber auch möglich, den Teig in eine geschlossene Form einzuspritzen.

Die so gebackenen Schalen wurden nach dem Backen an ihrer Innenoberfläche etwas angefeuchtet, dann mit Eiweißpulver gepudert und darauf kurz bei einer Temperatur von 68° C bis 70° C aufgebacken. Dies führt zu einer zuverlässigen Gerinnung des aufgepuderten Eiweißes. die Aufbackzeit betrug etwa 5 Minuten. Auf den Aufbackvorgang zum Einbrennen des Eiweißes kann verzichtet werden, wenn die Behältnisse selbst noch soviel innere Energie besitzen, daß das Eiweiß zur Gerinnung kommt. Andererseits läßt sich der Einbrennvorgang durch Erhöhung der Temperatur abkürzen. Hierdurch ergibt sich eine Glasur besonders dichter und glänzender Konsistenz. Es wäre auch denkbar, diese Aufpuderung zur Vermeidung einer nachträglichen Anfeuchtung und Einbrennung vor dem Backvorgang oder während des Backvorgangs aufzubringen. Anstelle von reinem Eiweiß kann auch ein puderförmiges Produkt mit hohem Eiweißgehalt Verwendung finden, z.B. Sojamehl. Selbstverständlich wäre es auch denkbar, die Behältnisse innen und außen zu glasieren.

## Patentansprüche

1. Verfahren zur Herstellung eines Einwegbehältnisses, vorzugsweise in Form einer Schale, aus unter Verwendung von Getreidemehl und Wasser hergestelltem Teig, der geformt und anschließend gebacken oder getrocknet wird, **dadurch gekennzeichnet, daß** das Behältnis zumindest auf seiner Innenseite mit einer Eiweiß zumindest enthaltenden Glasur versehen wird.

2. Verfahren nach Anspruch 1, **dadurch gekennzeichnet, daß** zur Bildung der Glasur reines Eiweiß Verwendung findet, das vorzugsweise bei noch zumindest teilweise rohem und/oder angefeuchtetem Behältnis aufgepudert wird.

3. Verfahren nach einem der vorhergehenden Ansprüche, **dadurch gekennzeichnet, daß** bei der Herstellung des Teigs reines Eiweiß zugegeben wird.

4. Verfahren nach Anspruch 3, **dadurch gekennzeichnet, daß** der Anteil an reinem Eiweiß 10 bis 20% der Trockensubstanz beträgt.

5. Verfahren nach einem der vorhergehenden Ansprüche, **dadurch gekennzeichnet, daß** das zur Herstellung des Teigs Verwendung findende Getreidemehl einen Anteil von 10 bis 20% der Trockensubstanz ausmacht.

6. Verfahren nach einem der vorhergehenden Ansprüche, **dadurch gekennzeichnet, daß** die Trockensubstanz des Teigs neben Getreidemehl und Eiweiß ein Füllmaterial vorzugsweise in Form von Treber und/oder Kleie und/oder Brösel und/oder Strohmehl etc. enthält.

7. Verfahren, insbesondere nach einem der vorhergehenden Ansprüche, **dadurch gekennzeichnet, daß** der Teig unter Verwendung von Lauge als Flüssigkeitsanteil hergestellt wird.

8. Verfahren nach Anspruch 7, **dadurch gekennzeichnet, daß** der Anteil der Lauge an der Gesamtflüssigkeit 3 bis 10% beträgt.

9. Verfahren nach einem der vorhergehenden Ansprüche 7 oder 8, **dadurch gekennzeichnet, daß** als Lauge Natronlauge, vorzugsweise in Form von Brezenlauge, Verwendung findet.

10. Verfahren nach einem der vorhergehenden Ansprüche, **dadurch gekennzeichnet, daß** zunächst Mehl und Eiweiß vorzugsweise unter Verwendung von Sauerteig angeteigt, dann das Füllmaterial mit dem restlichen Wasser zugegeben und der noch fehlende Flüssigkeitsanteil durch Lauge ergänzt werden.
